**Europäisches Patentamt**

**European Patent Office**

**Office européen des brevets**

(11) Veröffentlichungsnummer: **0 305 891 B1**

## EUROPÄISCHE PATENTSCHRIFT

(45) Veröffentlichungstag der Patentschrift: **06.11.91**

(51) Int. Cl.⁵: **F01N 7/08, F16L 51/02**

(21) Anmeldenummer: **88113837.4**

(22) Anmeldetag: **25.08.88**

(54) Leitungselement für Abgasanlagen.

(30) Priorität: **01.09.87 DE 3729147**

(43) Veröffentlichungstag der Anmeldung:
**08.03.89 Patentblatt 89/10**

(45) Bekanntmachung des Hinweises auf die
Patenterteilung:
**06.11.91 Patentblatt 91/45**

(84) Benannte Vertragsstaaten:
**DE ES FR GB IT**

(56) Entgegenhaltungen:
**DE-A- 2 529 508**
**DE-A- 2 655 091**
**DE-A- 3 219 360**
**DE-A- 3 336 465**
**FR-A- 2 324 866**

(73) Patentinhaber: **IWK Regler und Kompensatoren GmbH**
**Singerstrasse**
**W-7513 Stutensee(DE)**

(72) Erfinder: **Kunzmann, Thomas, Entw. Ing.,**
**Richard-Wagner-Strasse 13**
**W-7519 Walzbachtal(DE)**

(74) Vertreter: **Dr.-Ing. Hans Lichti Dipl.-Ing. Heiner Lichti Dipl.-Phys. Dr. Jost Lempert**
**Postfach 41 07 60 Durlacher Strasse 31**
**W-7500 Karlsruhe 41(DE)**

## Beschreibung

Die Erfindung betrifft ein Leitungselement für Abgasanlagen zur Kompensation von Relativbewegungen, mit einem Balg und einem Mantel aus einem Geflecht oder Gestricke.

Ein derartiges Leitungselement ist grundsätzlich aus der DE OS 32 19 360 bekannt. Es weist ein selbsttragendes relativ steifes Abgaswellrohr auf, das lediglich als halbflexibel bezeichnet werden kann. Das bekannte Abgaswellrohr kann Bewegungen senkrecht zur Achsenrichtung nur in sehr beschränkter Weise aufnehmen. Es weist eine Eigenresonanz von über 1000 Hz auf, die oberhalb der üblichen Frequenzen der die Abgase erzeugenden Anlagen liegt, wie eines Motors, insbesondere Kraftfahrzeugmotors, deren Erregungsfrequenz üblicherweise unter 200 Hz liegt. Die Motorerregung wird hauptsächlich durch unangeglichene oszillierende Massenkräfte bewegte Triebwerksmassen (Kolben, Pleuel usw.) hervorgerufen. Diese für die Balganregung verantwortlichen oszillierenden Massenkräfte 2.Ordnung ändern sich mit der doppelten Motordrehzahl. Die Wandstärken derartiger steifer Abgaswellrohre sind größer als 0,5 mm und liegen vorzugsweise im Bereich von 1mm, wodurch die hohe Steifigkeit bedingt ist.

Weiterhin weist das bekannte, relativ steife, als halbflexibel bezeichnete Leitungselement einen der Kontur der Wellen des Wellrohrs entlang der Wellenflanken folgenden Mantel aus metallischem Geflecht, Gewebe oder Gestricke auf, um die beim Einsatz derartiger Leitungselemente in Abgasleitungen von Kraftfahrzeugen durch pulsierende Strömungen auftretenden hochfrequenten hellen metallisch klirrenden Geräusche zu dämpfen, da, wie die Druckschrift ausführt, vorallem die Wellenflanken für die Geräuschentwicklung erforderlich seien, in dem diese unter der hochfrequenten Anregung durch die pulsierende Strömung, ähnlich wie Membrane, in Schwingungen gerieten.

Diese bekannten Leitungselemente weisen, wie gesagt, eine hohe Steifigkeit auf und sind daher zur Aufnahme und Kompensation allseitiger Bewegungen, wie sie bei derartigen, insbesondere in Kraftfahrzeugen eingesetzten Abgasanlagen auftreten, nicht geeignet.

Der Erfindung liegt die Aufgabe zugrunde, ein Leitungselement zu schaffen, das bei hoher thermischer Belastbarkeit eine hohe optimale allseitige Bewegungsaufnahme unter Vermeidung von Resonanzschwingungen aufgrund der Motorerregung ermöglicht.

Erfindungsgemäß wird die genannte Aufgabe durch ein Leitungselement der eingangs genannten Art gelöst, welches dadurch gekennzeichnet ist, daß der Balg ein hochflexibler Balg mit allseitiger Bewegungsaufnahme ist und der Mantel lediglich im wesentlichen den Wellenbergen des Balgs folgend auf diesen aufgebracht ist.

Die Erfindung setzt zunächst einen hochflexiblen allseitig beweglichen Balg ein, der im Hinblick auf maximale allseitige Beweglichkeit optimiert ist und der aufgrund seiner Ausgestaltung ansich eigene Resonanzfrequenzen im Bereich typischer Motorfrequenzen unter 200 Hz,insbesondere zwischen 150 und 200 Hz, aufweist. Ein Versuch der Verlagerung der Eigenfrequenzen durch andere Anlegung des Balgs selbst bedingt eine Reduzierung der Beweglichkeit, wie dies bei den bekannten Leitungselementen gegeben ist. In gleicher Weise würde die Beweglichkeit reduziert, wenn ein Gestricke- oder Geflechtmantel über die gesamten Balgwellen, insbesondere entlang der Flanken aufgebracht würden; dies gilt in erhöhtem Maße für im Stand der Technik u.a. auch vorgesehene Aufbringungen von Lochblechen entlang der Flanken. Mit der Erfindung wurde überraschenderweise gefunden, daß die Aufbringung eines Geflechts- oder Gestrickemantels lediglich den Wellenbergen folgend bei einem derartigen hochflexiblen Balg mit allseitiger Bewegungsaufnahme einerseits die Resonanzfrequenz verlagert und insbesondere aus dem Bereich der Motorfrequenz herausbringt, andererseits aber die Beweglichkeit des Balges praktisch nicht einschränkt. Eine Verlagerung der Resonanzfrequenz erfolgt auf das 1,2 bis 1,4-fache der Ausgangsresonanzfrequenz, was für praktische Zwecke vollauf ausreichend ist, wobei die hohe Beweglichkeit des eingesetzten Balgs nicht behindert wird.

Die Erfindung schafft eine formsteife Verbindung der Balgwellen mittels des Gestricke- oder Geflechtmantels. Fertigungsmäßig wird der Gestrickemantel in seinem Durchmesser dem Außendurchmesser der Wellenberge angepaßt, über den Balg gezogen und dann vorzugsweise leicht in die Wellentäler eingerollt,so daß er den Wellenbergen des Balgs aufgeformt wird und daher eine formschlüssige Verbindung mit diesen eingeht. Genauso wie wenn die Wandstärke des Balgs selbst vestärkt würde, würde ein Aufbringen des Gestrickemantels auf die Balgflanken die Biegewechselsteifigkeit und damit das Lastwechselbild in nachteiliger Weise verändern und Bruchgefahren erhöht.

Solche erfindungsgemäß eingesetzte typische hochflexiblen Bälge für eine Abgasleitung eines Kraftfahrzeugs mit der angegebenen Resonanzfrequenz haben bei Wandstärken von weniger 0,5 mm eine Masse im Bereich von weniger als 200g und axiale Federkonstante (Gesamtfederrate des Balgs) zwischen 5 - 20 N/mm.

Eine bevorzugte Ausgestaltung sieht vor, daß der Balg Balgwellen unterschiedlicher Steifigkeit aufweist, wobei insbesondere der Balg eine tonnenförmige Einhüllende hat. Bei dieser Ausgestaltung wird durch den Gestrickemantel eine Verbindung von Wellen höherer Axialsteifigkeit mit Wellen weicherer Axialsteifigkeit geschaffen, was zu einer vergleichbaren Erhöhung der Axialsteifigkeit des gesamten Kollektivs führt. Ein hochflexibler Balg weist eine Wandstärke einer Wandlage von nicht mehr als 0,4 mm , vorzugsweise im Bereich von 0,20 bis 3 mm auf. Wenn mehrlagige Bälge verwendet werden, so sollte die Gesamtstärke nicht über 0,5 mm und daher, insbesondere bei doppelwandigen Bälgen die einzelne Wandstärke jeder Balglage nicht mehr als 0,25 mm sein.

Die erfindungsgemäß erreichten Vorteile können durch die Anpassung des Gestrickes verbessert werden. So sieht eine weitere bevorzugte Ausgestaltung vor, daß der Mantel aus Gestricke oder Geflecht ein relativ kleines Verhältnis von Höhe zur Teilung der Masche des Geflechts oder Gestrickes aufweist, wobei insbesondere das Verhältnis von Höhe zur Teilung der Masche des Geflechts- oder Gestrickemantels kleiner 1 ist. Vorzugsweise liegt das Verhältnis von Höhe zur Teilung einer jeden Masche im Bereich von 0,6 bis 0,7. Hierdurch wird zum einen eine ausreichende Steifigkeit in Umfangsrichtung und zum anderen die erwünschte abgestimmte Erhöhung der Axialsteifigkeit des Kollektivs. Diese wird weiterhin dadurch unterstützt, daß die grundsätzlich U-förmigen Maschen des Gestricke-oder Geflechtsmantels eine Einbuchtung in ihrem U-Steg aufweisen, indem also eine Hinterwellung der Geflechtmaschen vorgesehen ist. Hierdurch wird bei hinreichender axialer Steifigkeit des Gestrickemantels bei eventuellen Drahtabrissen eine Maschenauflösung zuverlässig verhindert.

Damit zumindestens jede Balgwelle von einer Masche erfaßt wird, ist in weiterer Ausgestaltung vorgesehen, daß die Erstreckung (je nach Ausrichtung Höhe H oder Teilung T) einer Masche in Richtung der Achse des Balges nicht größer als die Teilung des Balgs entsprechend dem axialen Mittelabstand zweier aufeinander folgender Wellenberge ist.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnungen im einzelnen erläutert sind. Dabei zeigt:

Figur 1    eine erste schematische Darstellung des Erfindungsgegenstandes;

Figur 2    eine andere Ausgestaltung mit Wellen unterschiedlicher Axialsteifigkeit;

Figur 3    eine bevorzugte Ausgestaltung eines Geflechts oder Gestrickes.

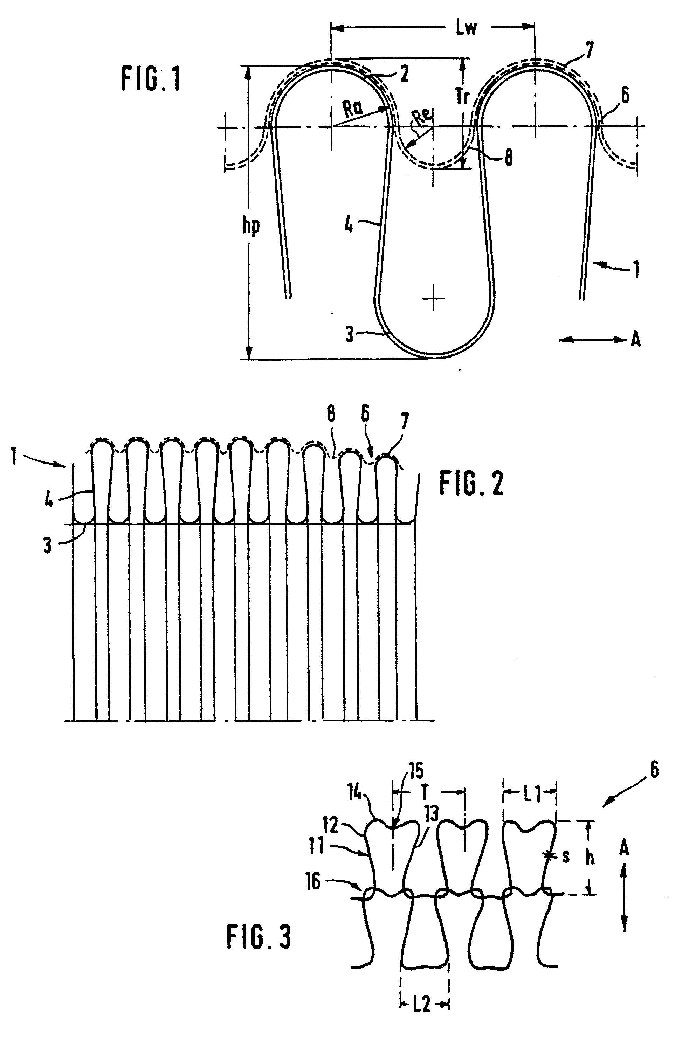

Das in der Fig. 1 dargestellte Profil eines Balgs 1 zeigt in Axialrichtung A abwechselnd aufeinander folgende Wellenberge 2 und Wellentäler 3, die durch Wellenflanken 4 verbunden sind. Der Balg hat eine Wellenteilung Lw als Abstand zwischen den Mittellinien zweier Wellenberge und eine Profilhöhe hp zwischen den Scheiteln des Wellenbergs und des Wellentals. Die Wellenberge und Wellentäler 2, 3 haben einen äußeren Krümmungsradius Ra. Auf die Wellenberge 2 ist als Mantel ein Gestrickeüberzug aufgebracht, der im dargestellten Schnitt ebenfalls Wellenform mit Wellenberg 7 und Wellental 8 aufweist. Der Gestrickeüberzug 6 ist derart auf den Balg aufgebracht, daß er mit seinem Wellenberg 7 fest auf dem Wellenberg 2 des Balgs aufliegt und diesem folgt, sich aber im Übergangsbereich von Wellenberg 2 zur Flanke 4 des Balgs 1 vom Balg 1 löst, so daß das Wellental 8 des Gestrickemantels 6 einen endlichen Abstand vom Wellental 3 des Balgs 1 aufweist. Der Gestrickemantel hat also eine Gesamteindringtiefe Tr in die Wellentäler zwischen die Wellentäler die wesentlich kleiner ist als die Balgprofilhöhe.

Wichtig ist, daß der Gestrickemantel 6 zwar einerseits im Bereich der Wellenberge 2, 7 eine formsteife Verbindung mit den Balgwellen bildet, sich aber im Übergangsbereich derselben von den Wellenflanken 4 vom Balg 1 löst und in keiner Weise an den Wellenflanken 4 anliegt. Falls bei besonderen Ausgestaltungen keine Wellenflanken 4 vorhanden sind, so ist ebenfalls wichtig, daß der Gestrickeüberzug 6 sich vor dem Wellental 3 von der Wandung des Balges 1 löst, also zwischen Balgwellen nicht der gesamten Balgkontur und insbesondere nicht den Wellenflanken folgend auf den Balg anlegt. Der Gestrickemantel 6 kann vorzugsweise dadurch auf den Balg aufgebracht werden, daß er mit einem der Außenkontur des Balgs entsprechenden Durchmesser hergestellt wird, über den Balg gezogen und anschließend zwischen den Wellenbergen 2 separat in der gewünschten Tiefe in die Zwischenbereiche eingerollt wird, wobei das Wellental 8 des Mantels 6 einen Einrollradius Re erhält. Der Mantel 6 wird nur dadurch auf dem Balg gehalten, daß er der konvexen Kontur der Wellenberge folgt, ohne daß er mit seinen Enden zusätzlich an den Balgenden oder Anschlußstutzen unlösbar und fest angebracht, beispielsweise verschweißt wäre. Hierdurch ist ein fester Sitz des Mantels 6 und eine dauerhafte Formtreue erreicht.

Bei der bevorzugten Ausgestaltung der Fig. 2 weisen die Balgwellen unterschiedliche Durchmesser auf, wobei genauer die Balgberge unterschiedliche Durchmesser aufweisen, während die Balgtäler einen gemeinsamen Durchmesser haben. Hierdurch wird ein Balg mit unterschiedlicher Axialsteifigkeit der einzelnen Wellen geschaffen, wodurch die Axialsteifigkeit des Gesamtkollektivs erhöht wird. Darüberhinaus wird der Sitz und Formtreue des aufgebrachten Geflechts bei einem solchen Balg noch verbessert.

Bei der Ausgestaltung der Fig. 3 ist eine bevorzugte Form eines Geflechts oder Gestrickes dargestellt. Das Gestricke 6 weist U- bzw. Doppel-U-förmige Maschen 11 mit jeweils zwei U-Schenkeln 12, 13 jeder Masche und einen U-Steg 14 auf. Die U-Stege 14 sind dabei zum Teil mit einer Einbuchtung 15 versehen,in welche ein besseres Verhaken (bei 16 aufeinanderfolgender Maschen 11) gegeben ist. Die Höhe einer Masche ist mit h bezeichnet. Die obere bzw. untere Breite einer Masche ist mit L1 bzw. L2 und die Teilung des Maschengeflechts 6 in senkrechter Richtung zur Höhe h definiert als der Abstand einer Maschenmitte zur Mitte der nächstfolgenden gleich ausgerichteten U-förmigen Masche mit T. Die Breite der Masche im Bereich des jeweiligen U-Stegs kann für unterschiedlich ausgerichtete U-Maschen - die jeweils mit wechselweiser Ausrichtung in Teilungsrichtung aufeinander folgen - unterschiedlich sein. Der Gestrickemantel 6 wird vorzugsweise derart auf den Balg aufgebracht, daß die Höhe h der Maschen sich in der axialen Bewegungsrichtung, also parallel zur Balgachse erstreckt.

In einem konkreten Ausführungsbeispiel wurde ein Balg 1 entsprechend der Fig. 2 mit 9 Wellenbergen eingesetzt, die einen verschiedenen Außendurchmesser zwischen 65 und 70 mm aufwiesen. Der Innendurchmesser der Wellentäler betrug einheitlich etwa 50 mm. Die Einbaulänge betrug etwa 45 mm. Der Balg bestand aus ferritischem Stahl X 10 CrNiMoTi 18 10 mit der Stoffnummer 1.4571 nach DIN 17007 und zwar zweilagig, wobei die Stärke jeder Lage 0,15 mm betrug. Die Masse des Balgs selbst war 83g. Er hatte eine axiale Federkonstante von 9,6 N/mm.

Entsprechend dem sich veränderten Balgaußendurchmesser über seine Länge war die größte Balgprofilhöhe hp 10mm, unter 8mm. Die Wellenteilung Lw betrug 4,6mm bei einem äußeren Krümmungsradius Ra von 1,3mm.

Auf diesen Balg wurde ein Gestricke mit einer Breite von 86mm aus einem 0,32 mm starken Draht aus X 5 CrNi 18 9-Stahl mit der Stoffnummer 1.4301 nach DIN 17007 aufgebracht. Das Gestricke hatte eine Maschenzahl von 30 über die Breite mit einer Maschenteilung T von 5,7 mm bei oberen und unteren Maschenbreiten L1 bzw. L2 von 4,4 bzw. 3, 7 mm sowie einer Maschenhöhe von 5 mm. Der Gestrickemantel hat eine Gesamtmasse von 7,8 g bei einer Längendichte von 82 g pro Meter.

Versuche ergaben eine Zugfestigkeit von über 800N bei einer Bruchdehnung von etwa 50 %.

Dieses Gestricke wurde unter einem Einrollradius Re von 0,9 mm bis auf eine Eindring- oder Einholtiefe von 2, 5mm auf die Wellenberge 2 des Balgs 1 aufgebracht.

Während der reine Balg 1 ohne Gestricke eine Resonanzfrequenz bei 170 Hz aufwies, ergab sich für das Gesamtkollektiv aus Balg 1 und Gestrickemantel 6 bei einer Gesamtmasse von 90,8 g eine Resonanzfrequenz bei 210 Hz mit einer kollektiven Gesamtbalgfederrate von 16 N/mm. Dies bedeutet eine Resonanzerhöhung durch das erfindungsgemäße Aufbringen des Gestrickemantels 6 mit einer Masse von weniger als 10 % der Balgmasse um 23%, wodurch bei dem eingesetzten hochflexiblen Balg, der als solcher im Hinblick auf maximale allseitige Beweglichkeit optimiert ist, seine Resonanzfrequenz bei dem vorgesehenen Einsatzzweck von der Frequenz des Motors erfolgreich fortverlagert werden konnte.

## Patentansprüche

1. Leitungselement für Abgasanlagen zur Kompensation von Relativbewegungen, mit einem Balg und einem Mantel aus einem Geflecht oder Gestricke, dadurch gekennzeichnet, daß der Balg (1) ein hochflexibler Balg mit allseitiger Bewegungsaufnahme ist und der Mantel (6) lediglich im wesentlichen den Wellenbergen (2) des Balgs (1) folgend auf diese aufgeformt ist.

2. Element nach Anspruch 1, dadurch gekennzeichnet, daß der Balg (1) Balgwellen unterschiedlicher Steifigkeit aufweist.

3. Element nach Anspruch 2, dadurch gekennzeichnet, daß der Balg (1) eine tonnenförmige Einhüllende hat.

4. Element nach einem der Ansprüche 1 bis 3, dadurch gekennzeichnet, daß eine Lage der Balgwandung höchstens 0,4 mm stark ist.

5. Element nach Anspruch 4, dadurch gekennzeichnet, daß die Lagenstärke 0,20 bis 0,3 mm beträgt.

6. Element nach einem der vorangehenden Ansprüche, dadurch gekennzeichnet, daß bei einem mehrwandigen, insbesondere doppelwandigen Balg (1) eine Lage des Balgmaterials eine Wandstärke von höchstens 0,25 mm hat.

7. Element nach Anspruch 6, dadurch gekennzeichnet, daß die Wandstärke einer Lage zwischen 0,10 und 0,20 mm liegt.

8. Element nach einem der vorangehenden Ansprüche, dadurch gekennzeichnet, daß der Mantel (6) aus Gestricke oder Geflecht ein relativ kleines Verhältnis von Höhe (h) zur Teilung (T) der Masche (11) des Geflechts oder Gestrickes aufweist.

9. Element nach Anspruch 8, dadurch gekennzeichnet, daß das Verhältnis von Höhe (h) zur Teilung (T) der Masche (11) des Geflechts- oder Gestrickemantels (6) kleiner 1 ist.

10. Element nach Anspruch 9, dadurch gekennzeichnet, daß das Verhältnis von Höhe (h) zur Teilung (T) der Masche (11) des Mantels (6) zwischen 0,6 und 0,7 mm liegt.

11. Element nach einem der vorangehenden Ansprüche, dadurch gekennzeichnet, daß die Erstreckung (je nach Ausrichtung Höhe h oder Teilung T) einer Masche (11) in Riohtung der Achse des Balges (1) nicht größer als die Teilung des Balges entsprechend dem axialen Mittelabstand zweier aufeinander folgender Wellenberge (2) ist.

12. Element nach einem der vorangehenden Ansprüche, dadurch gekennzeichnet, daß die grundsätzlich U-förmigen Maschen (11) des Gestricke- oder Geflechtsmantels (6) eine Einbuchtung (15) in ihrem U-Steg (14) aufweisen.

13. Element nach einem der vorangehenden Ansprüche, dadurch gekennzeichnet, daß die Eindringtiefe des Gestrickemantels (6) zwischen den Balgwellenbergen höchstens 30 % der Balgprofilhöhe beträgt.

14. Element nach Anspruch 13, dadurch gekennzeichnet, daß die Eindringtiefe des Gestrikkemantels zwischen 15 und 25 % der Balgprofilhöhe beträgt.

15. Element nach einem der vorangehenden Ansprüche, dadurch gekennzeichnet, daß die zusätzliche Masse des Gestrickemantels (6) höchstens 15 % der Masse des Balgs (1) beträgt.

**Claims**

1. Line element for exhaust systems for compensating relative movements, with a bellows and a jacket made from a knitted or braided structure, characterized in that the bellows (1) is a highly flexible bellows with all-round movement absorption and the jacket (6) is formed thereon only substantially following the corrugation crests (2) of the bellows (1).

2. Element according to claim 1, characterized in that the bellows (1) has corrugations with differing rigidity.

3. Element according to claim 2, characterized in that the bellows (1) has a drum-shaped contour.

4. Element according to one of the claims 1 to 3, characterized in that the bellows wall layer is at the most 0.4 mm thick.

5. Element according to claim 4, characterized in that the layer thickness is 0.2 to 0.3 mm.

6. Element according to any one of the preceding claims, characterized in that in the case of a multiwall, particularly double-wall bellows (1) a layer of the bellows material has a wall thickness of max. 0.25 mm.

7. Element according to claim 6, characterized in that the wall thickness of a layer is between 0.10 and 0.20 mm.

8. Element according to any one of the preceding claims, characterized in that the knitted or braided jacket (6) has a relatively small ratio of height (h) to spacing (T) of the mesh (11) of the knitted or braided structure.

9. Element according to claim 8, characterized in that the ratio of the height (h) to the spacing (T) of the mesh (11) of the knitted or braided structure (6) is smaller than 1.

10. Element according to claim 9, characterized in that the ratio of the height (h) to the spacing (T) of the mesh (11) of the jacket (6) is between 0.6 and 0.7 mm.

11. Element according to any one of the preceding claims, characterized in that the extension (as a function of the orientation of the height h or spacing T) of a mesh (11) in the direction of the axis of the bellows (1) is no greater than the spacing of the bellows in accordance with the axial centre spacing of two successive corrugation crests (2).

12. Element according to any one of the preceding claims, characterized in that the fundamentally U-shaped meshes (11) of the knitted or braided jacket (6) have an indentation (15) in the U-web (14) thereof.

13. Element according to any one of the preceding claims, characterized in that the penetration depth of the knitted jacket (6) between the bellows corrugation crests is max. 30% of the bellows profile height.

**14.** Element according to claim 13, characterized in that the penetration depth of the knitted jacket is between 15 and 25% of the bellows profile height.

**15.** Element according to any one of the preceding claims, characterized in that the additional weight of the knitted jacket (6) is max. 15% of the weight of the bellows (1).

**Revendications**

**1.** Elément de conduite pour systèmes de gaz d'échappement pour compenser des mouvements relatifs, comprenant un soufflet et une enveloppe tressée ou tricotée, **caractérisé en ce** que le soufflet (1) est un soufflet hautement flexible permettant l'absorption de mouvements polydirectionnels, et que l'enveloppe (6) n'est appliquée sur celui-ci que de façon à suivre essentiellement les sommets (2) des ondulations dudit soufflet (1).

**2.** Elément selon la revendication 1, caractérisé en ce que le soufflet (1) comprend des ondulations de rigidité variable.

**3.** Elément selon la revendication 2, caractérisé en ce que le soufflet (1) a une enveloppante en forme de barillet.

**4.** Elément selon l'une des revendications 1 à 3, caractérisé en ce qu'une couche de la paroi du soufflet présente une épaisseur de 0,4 mm au maximum.

**5.** Elément selon la revendication 4, caractérisé en ce que l'épaisseur des couches est de 0,20 à 0,3 mm.

**6.** Elément selon l'une des revendications précédentes, caractérisé en ce que, pour un soufflet (1) à plusieurs parois, et notamment à double paroi, une couche du matériau du soufflet présente une épaisseur maximale de 0,25 mm.

**7.** Elément selon la revendication 6, caractérisé en ce que l'épaisseur de paroi d'une couche se situe entre 0,10 et 0,20 mm.

**8.** Elément selon l'une des revendications précédentes, caractérisé en ce que l'enveloppe (6) constituée de tricotage ou de tressage présente un rapport relativement faible entre la hauteur (h) et le pas (T) de la maille (11) du tressage ou du tricotage.

**9.** Elément selon la revendication 8, caractérisé en ce que le rapport entre la hauteur (h) et le pas (T) de la maille (11) de l'enveloppe tressée ou tricotée (6) est inférieur à 1.

**10.** Elément selon la revendication 9, caractérisé en ce que le rapport entre la hauteur (h) et le pas (T) de la maille (11) de l'enveloppe (6) se situe entre 0,6 et 0,7 mm.

**11.** Elément selon l'une des revendications précédentes, caractérisé en ce que l'extension d'une maille (11) dans la direction de l'axe du soufflet (1) (selon l'orientation dans le sens de la hauteur h ou du pas T) n'est pas plus grande que le pas du soufflet conformément à la distance axiale moyenne entre deux sommets d'ondulation (2) consécutifs.

**12.** Elément selon l'une des revendications précédentes, caractérisé en ce que les mailles (11) de l'enveloppe tricotée ou tressée (6) fondamentalement conformées en U présentent une anfractuosité (15) dans leur dos de U (14).

**13.** Elément selon l'une des revendications précédentes, caractérisé en ce que la profondeur de pénétration de l'enveloppe tricotée (6) entre les sommets des ondulations du soufflet est au maximum de 30 % de la hauteur du profil du soufflet.

**14.** Elément selon la revendication 13, caractérisé en ce que la profondeur de pénétration de l'enveloppe tricotée se situe entre 15 et 25 % de la hauteur du profil du soufflet.

**15.** Elément selon l'une des revendications précédentes, caractérisé en ce que la masse supplémentaire de l'enveloppe tricotée (6) est au maximum de 15 % de la masse du soufflet (1)

FIG.1

FIG.2

FIG.3